# EUROPÄISCHE PATENTANMELDUNG

(11) **EP 1 079 168 A1**
(43) Veröffentlichungstag der Anmeldung: **28.02.2001**
(21) Anmeldenummer: 00117596.7
(22) Anmeldetag: 16.08.2000
(51) Int. Cl.: F16L 55/033, F16L 3/18

(54) **Vorrichtung zur Anbringung und axialen Festlegung einer Rohrleitung**

(30) Priorität: 27.08.1999 DE 29915020 U
(71) Anmelder: Pfitzmann, Wolfgang, 21339 Lüneburg (DE)
(72) Erfinder: Pfitzmann, Wolfgang, 21339 Lüneburg (DE)
(74) Vertreter: Patentanwälte Hauck, Graalfs, Wehnert, Döring, Siemons

(57) **Zusammenfassung**

Vorrichtung zur Anbringung und axialen Festlegung einer Rohrleitung (10) an einer Tragkonstruktion (36a) mit folgenden Merkmalen:
- ein auf der Rohrleitung (10) axial festgelegter Stützring (14,14a),
- eine Stützhülse (12), die axial geteilt aus mindestens zwei fest miteinander verbindbaren Teilen (22,24) besteht, wobei die Stützhülse (12) an der Innenseite axial beabstandete Anschläge (32,34) aufweist, die an gegenüberliegenden Seiten des Stützrings (14,14a) angreifen und mit diesem axial zusammenwirken und
- an der Außenseite der Stützhülse (12) angreifende Befestigungsmittel (42,44,46,52) zur Anbringung der Stützhülse (12) an der Tragkonstruktion (36a),
- zwischen den Anschlägen (32,34) und dem Stützring (14,14a) ist Dämpfungsmaterial (36) angeordnet.

## Beschreibung

Die Erfindung bezieht sich auf eine Vorrichtung zur Anbringung und axialen Festlegung einer Rohrleitung.

Häufig ist bei längeren in Gebäuden anzubringenden Rohrleitungen ein Festpunkt erforderlich, an dem die Rohrleitung axial unverrückbar an einer Tragkonstruktion festgelegt ist, wobei sie sich auf beiden Seiten des Festpunkts, z. B. in Abhängigkeit von Temperaturänderungen, ausdehnen kann. Ausdehnungen können durch sog. Kompensatoren aufgefangen werden. Häufig werden derartige Rohrleitungen vertikal verlegt. Weisen sie einen größeren Durchmesser auf, ist von einer Befestigung der Rohrleitung eine erhebliche Gewichtskraft aufzunehmen. Außerdem wird zumeist gefordert, die Anbringung von Rohrleitungen an einer Tragkonstruktion schwingungs- bzw. schallgedämpft zu bewerkstelligen, damit über die Rohrleitungen keine Körperschallübertragungen auf die Tragkonstruktion und umgekehrt stattfinden.

Aus DE-U-90 12 521 ist eine Vorrichtung zur axialen Absicherung einer an einer Tragkonstruktion angebrachten Rohrleitung bekannt geworden, bei der mindestens eine die Rohrleitung umgreifende Schelle mit schallisolierender Einlage über ein erstes Tragelement mindestens eine fest mit der Rohrleitung verbundene Schelle über ein zweites Tragelement mit der Halterung verbunden sind. Das zweite Tragelement ist entweder in der Halterung oder an der Schelle quer zur Rohrleitungsachse schwimmend gelagert und über ein Dämpfungselement in Achsrichtung der Rohrleitung abgestützt. Ein derartiger 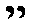 Festpunkt" benötigt eine Mehrfachanbindung der die Rohrleitung umgreifenden Schellen mit der Tragkonstruktion.

Aus DE-U-94 05 929 ist eine Vorrichtung zur axialen Abstützung einer an einer Tragkonstruktion angebrachten Rohrleitung bekannt geworden, bei der mit der Schelle ein Gewindebolzen verbindbar ist, der an einer Tragkonstruktion anbringbar ist, beispielsweise durch Einschrauben in eine Buchse, die ihrerseits an der Tragkonstruktion, beispielsweise einer Schiene, befestigt ist. Eine mit einer schalldämmenden Einlage versehene Schelle ist an beiden Enden axial durch einen Anschlag begrenzt, der fest auf der Rohrleitung angebracht ist. Die Anschläge können z. B. von Ringbunden gebildet sein, die aus miteinander verbindbaren Ringhälften bestehen, die über Schrauben miteinander verbindbar sind. Zur seitlichen Abstützung sind längenveränderliche Schenkel mit der Schelle verbunden, die sich am anderen Ende an der Schiene bzw. der Tragkonstruktion abstützen.

Aus DE 296 19 089 ist eine Vorrichtung zur axialen Festlegung einer Rohrleitung bekannt geworden, bei der mindestens eine Rohrschelle an einem ersten Tragteil befestigt ist, das seinerseits mit einem starren Rohr verbindbar ist. Ein muffenartiges Begrenzungsteil ist auf einem zweiten Tragteil angebracht, beispielsweise durch Schweißung. Das starre Rohr wird in das muffenartige Begrenzungsteil eingesteckt, wobei das zweite Tragteil Mittel zur Anbringung an einer Decke, Wand oder dergleichen aufweist. Innerhalb des starren Rohrs ist eine Stange geführt, die an einem Ende mit dem zweiten Tragteil, beispielsweise der Tragplatte, verbindbar ist und die durch eine Öffnung im ersten Tragteil hindurchgeführt ist, wobei das erste Tragteil an einem Rohr mit Hilfe einer auf das Ende der Stange aufschraubbaren Mutter am ersten Tragteil festlegbar ist. Eine derartige Vorrichtung ist insbesondere für die axiale Festlegung von dickeren Rohrleitungen geeignet und ermöglicht eine Anpassung des Abstands der Rohrleitung von der Tragkonstruktion. Zu diesem Zweck kann das starre Rohr an der Außenseite Markierungen aufweisen, um die gewünschte Längeneinstellung vorzunehmen. Die Markierungen erleichtern das Ansetzen des Trennwerkzeugs und das Durchtrennen an der gewünschten Position.

Der Erfindung liegt die Aufgabe zugrunde, eine Vorrichtung zur Anbringung und axialen Festlegung einer Rohrleitung an einer Tragkonstruktion zu schaffen, die für Rohrleitungen unterschiedlichen Durchmessers geeignet ist und auch insbesondere für Rohrleitungen größeren Durchmessers und damit großen Gewichts.

Diese Aufgabe wird durch die Merkmale des Anspruchs 1 gelöst.

Bei der erfindungsgemäßen Vorrichtung ist ein auf der Rohrleitung axial festlegbarer Stützring vorgesehen. Dieser Stützring kann aus zwei oder mehr Teilen bestehen, die um die Rohrleitung herum gelegt zu einem Ring geformt werden, indem die Teile miteinander verschraubt oder verschweißt werden. Die Anbringung eines derartigen Stützrings ist jedoch aus dem oben beschriebenen Stand der Technik an sich bekannt.

Die erfindungsgemäße Vorrichtung weist ferner eine Stützhülse auf, die axial geteilt ist, wobei die miteinander vorzugsweise durch eine Schraubverbindung fest verbindbaren Hälften an der Innenseite axial beabstandet Anschläge aufweisen, die so angeordnet sind, daß sie den Stützring an der Rohrleitung zwischen sich axial sichern. Es sind verschiedene konstruktive Möglichkeiten denkbar, die Anschläge innerhalb der Stützhülse auszugestalten. Eine besteht erfindungsgemäße darin, Ringsegmente, vorzugsweise halbkreisförmige Ringsegmente, zu verwenden, die vorzugsweise mit den Hülsenteilen verschweißt sind. Bei der Montage wird mithin zunächst der Stützring axial fest an der Rohrleitung angebracht. Anschließend kann die Stützhülse um die Rohrleitung herum gelegt werden, wobei die Anschläge den Stützring einschließen. Es ist dann nur noch erforderlich, die Stützhülse an der Tragkonstruktion anzubringen. Hierzu sind geeignete Befestigungsmittel vorgesehen, welche mit der Außenseite der Stützhülse zusammenwirken und mit der Tragkonstruktion verbunden werden, um mit der beschriebenen Vorrichtung einen Festpunkt zu bilden.

Die erfindungsgemäße Vorrichtung ist in der Lage, hohe Kräfte aufzunehmen, was insbesondere bei Rohrleitungen größeren Durchmessers der Fall ist, wenn aufgrund einer großen Länge eine entsprechende Gewichtskraft aufgefangen werden muß. Die Erfindung hat ferner den Vorteil, daß eine Anpassung an unterschiedliche Rohrleitungsdurchmesser nur für den Stützring erforderlich ist. Der Stützring kann mit unterschiedlichen Innendurchmessern versehen werden, während sein Außendurchmesser konstant bleibt. Demgemäß können auch die Abmessungen der Stützhülse unabhängig vom jeweiligen Rohrleitungsdurchmesser vorgesehen werden. Der Lagerhalterungsaufwand einer erfindungsgemäßen Befestigungsvorrichtung für unterschiedliche Rohrleitungsdurchmesser ist daher minimal. Vorteilhaft ist ferner, daß eine Isolierung um die Rohrleitung in die Hülse hinein bis zum jeweiligen Anschlag geführt werden kann.

Um die Hülsenteile fest miteinander verbinden zu können, weisen diese radiale Flansche auf, welche über Schraubverbindungen gegeneinander gespannt werden können.

Für die Anbringung von Befestigungsmitteln an der Außenseite der Stützhülse ist in einer Ausgestaltung der Erfindung vorgesehen, daß von der Außenseite her in mindestens ein Hülsenteil mindestens eine Gewindebohrung geformt ist für die Anbringung der Befestigungsmittel. So kann z. B. über eine Schraubverbindung, die mit der Gewindebohrung zusammenwirkt, eine C-förmige Schiene angebracht werden, wie sie in Verbindung mit der Anbringung von Rohrleitungen und dergleichen in Gebäuden an Wänden, Decken oder dergleichen bekannt geworden ist. Die Schiene wird mit ihrem Steg an der Stützhülse befestigt, während eine Befestigungsvorrichtung mit dem Schlitz der Schiene zusammenwirkt, um die Schiene an einer Tragkonstruktion anzubringen, beispielsweise einer Decke, einer Wand oder dergleichen. Es ist jedoch auch denkbar, die Schiene mit der Wand oder der Decke fest zu verbinden und eine mit der Schiene zusammenwirkende Befestigungsvorrichtung mit der Außenseite der Hülse zu verbinden.

Alternativ zur Gewindebohrung kann auch eine Gewindebuchse außen an die Hülse angeschweißt werden.

Die Erfindung wird nachfolgend anhand von in den Zeichnungen dargestellten Ausführungsbeispielen näher erläutert.
Fig. 1 zeigt die Stirnansicht einer Vorrichtung nach der Erfindung an einem Rohr
Fig. 2 zeigt einen Schnitt durch die Darstellung nach Fig. 1 entlang der Linie 2-2.
Fig. 3 zeigt eine Ansicht der Vorrichtung nach Fig. 1 in Richtung Pfeil 3.
Fig. 4 zeigt schematisch die Seitenansicht einer Vorrichtung nach Fig. 1 sowie ihre Anbringung an einer Decke.
Fig. 5 zeigt einen Teil der Vorrichtung nach Fig. 1 mit einer Befestigungsschiene.
Fig. 6 zeigt die Stirnansicht eines Stützringes der Vorrichtung nach Fig. 1.

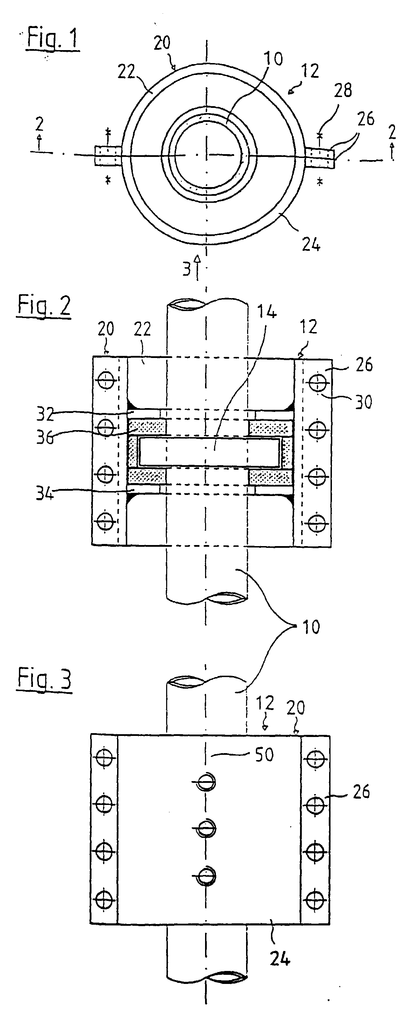

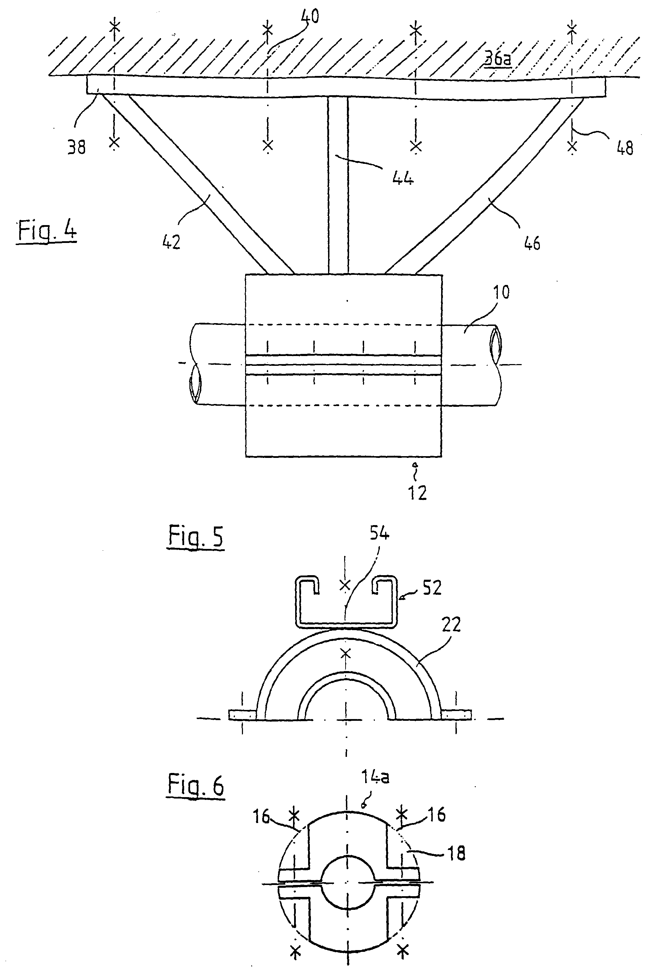

In den Fig. 1 bis 3 ist eine Rohrleitung 10 dargestellt, die an einer Tragkonstruktion angebracht werden soll, beispielsweise einer Wand, einer Decke oder dergleichen. An der Rohrleitung 10 ist eine Vorrichtung 12 angebracht. Sie weist einen Ring 14 auf, der fest bzw. klemmend auf der Rohrleitung 10 angebracht ist, beispielsweise durch Schweißung. Aus Montagegründen ist der Ring 14 geteilt, damit er um die Rohrleitung 10 herum gelegt werden kann. Fig. 6 zeigt eine alternative Ausführung. Der Ring 14a ist ebenfalls zweigeteilt, jedoch durch bei 16 angedeutete Schraubverbindungen kraftschlüssig an der Rohrleitung 10 festgelegt. Damit über den Umfang und über die Stirnfläche des Rings 14 bzw. 14a keine überstehenden Abschnitte entstehen, weisen die Ringhälften nach Fig. 6 am Umfang Ausnehmungen 18 auf, welche die im einzelnen nicht gezeigten Schraubverbindungen aufnehmen.

Die Vorrichtung 12 weist ferner eine Stützhülse 20 auf, die aus zwei Hälften 22, 24 besteht, die jeweils an den einander zugekehrten Seiten radiale Flansche 26 aufweisen, die über Schraubverbindungen 28 gegeneinander gespannt sind. Wie aus den Fig. 2 und 3 zu erkennen, sind hierfür in den Flanschen 26 Löcher 30 geformt, durch die Schraubenschäfte hindurchgeführt werden können.

Wie aus Fig. 2 zu erkennen, sind in die Hülsenhälften 22, 24 an der Innenseite Ringsegmente 32, 34 im axialen Abstand eingeschweißt, deren Innendurchmesser größer ist als der Außendurchmesser der Rohrleitung 10 und deren Abstand geringfügig größer ist als die Dicke des Stützrings 14. In den verbleibenden Raum ist Dämmmaterial 36 eingesetzt. Mithin ist der Stützring 14 axial in der Sttitzhülse 12 gesichert, wenn letztere ihrerseits an einer Tragkonstruktion festgelegt ist.

Eine solche Tragkonstruktion ist bei 36 in Fig. 4 angedeutet, beispielsweise als Decke. An der Decke 36a ist eine Befestigungsplatte 38 angebracht mit Hilfe von Schraubankern 40. Von der Platte 38 gehen drei Streben 42, 44, 46 ab, die durch geeignete Schraubverbindungen 48 fest mit der Platte 38 verbunden sind. Die Streben 42, 46 sichern die Vorrichtung 12 diagonal, und die Strebe 44 sichert die Vorrichtung 12 zwecks Aufnahme von Querkräften. Die Anbringung der Streben 42 bis 46 kann an Gewindelöchern 50 vorgenommen werden, die an der Außenseite einer Stützhülsenhälfte 22, 24 geformt sind. Die Anbringung der Streben 42 bis 46 ist im einzelnen nicht dargestellt. Es versteht sich, daß für eine Strebe 42, 46 jeweils auch zwei Streben verwendet werden können, die im Winkel zueinander verlaufen, um eine Vierpunktabstützung an der Decke 36a zu bewerkstelligen. Die Streben 42 bis 46 können im übrigen auch in der Länge verstellt werden, um eine Anpassung des Abstands der Vorrichtung 12 zur Decke 36a zu erhalten.

In Fig. 5 ist angedeutet, daß mit einer Hälfte 22 der Stützhülse 20 eine im Profil C-förmige Schiene 52 über eine Schraubverbindung 54 angebracht sein kann. Sie dient zur Anbringung einer Befestigungsvorrichtung, die ihrerseits etwa mit der Decke 36a verbunden ist. Alternativ kann eine Schiene, wie die Schiene 52, auch an der Decke 36a angebracht sein und eine mit der Schiene zusammenwirkende Befestigungsvorrichtung ist dann mit der Stützhülse 20 verbunden, beispielsweise über die Gewindelöcher 50.

## Patentansprüche

1. Vorrichtung zur Anbringung und axialen Festlegung einer Rohrleitung an einer Tragkonstruktion mit folgenden Merkmalen:
- ein auf der Rohrleitung (10) axial festgelegter Stützring (14, 14a),
- eine Stützhülse (10), die axial geteilt aus mindestens zwei fest miteinander verbindbaren Teilen (22, 24) besteht, wobei die Stützhülse (20) an der Innenseite axial beabstandete Anschläge (32, 34) aufweist, die an gegenüberliegenden Seiten des Stützrings (14) angreifen und mit diesem axial zusammenwirken und
- an der Außenseite der Stützhülse (20) angreifende Befestigungsmittel (42, 44, 46, 52) zur Anbringung der Stützhülse (20) an der Tragkonstruktion (36a),
- zwischen den Anschlägen (32, 34) und dem Stützring (14) ist Dämpfungsmaterial (36) angeordnet.

2. Vorrichtung nach Anspruch 1, dadurch gekennzeichnet, daß der Stützring (14, 14a) zweigeteilt ist.

3. Vorrichtung nach Anspruch 2, dadurch gekennzeichnet, daß die Stützringteile auf die Rohrleitung (10) aufgeschweißt sind.

4. Vorrichtung nach Anspruch 2, dadurch gekennzeichnet, daß die Stützringteile nach Art einer Schelle über Schraubverbindungen (18) miteinander verschraubt sind.

5. Vorrichtung nach Anspruch 4, dadurch gekennzeichnet, daß die Schraubverbindung keine über den Umfang und die Stirnseiten der Stützringteile vorstehenden Abschnitte aufweist.

6. Vorrichtung nach einem der Ansprüche 1 bis 5, dadurch gekennzeichnet, daß die Anschläge (32, 34) von Ringsegmenten gebildet sind, die mit der Innenseite der Hülsenteile (22, 24) verschweißt sind.

7. Vorrichtung nach einem der Ansprüche 1 bis 6, dadurch gekennzeichnet, daß die Hülsenteile (22, 24) radiale Flanschen (26) aufweisen zur Verbindung über Schraubverbindungen (28).

8. Vorrichtung nach einem der Ansprüche 1 bis 7, dadurch gekennzeichnet, daß von der Außenseite her in mindestens ein Hülsenteil (24) mindestens eine Gewindebohrung (50) geformt ist für die Anbringung der Befestigungsmittel.

9. Vorrichtung nach einem der Ansprüche 1 bis 7, dadurch gekennzeichnet, daß eine Gewindebuchse an die Außenseite eines Hülsenteils angeschweißt ist.

10. Vorrichtung nach Anspruch 9, dadurch gekennzeichnet, daß eine im Querschnitt C-förmige Schiene (52) mit der Stützhülse (20) verschraubt ist.
